(19) Europäisches Patentamt
European Patent Office
Office européen des brevets

(11) **EP 2 100 366 B1**

(12) **EUROPÄISCHE PATENTSCHRIFT**

(45) Veröffentlichungstag und Bekanntmachung des Hinweises auf die Patenterteilung:
**19.07.2017  Patentblatt 2017/29**

(21) Anmeldenummer: **06828682.2**

(22) Anmeldetag: **08.12.2006**

(51) Int Cl.:
***H02M 1/00*** *(2007.01)*

(86) Internationale Anmeldenummer:
**PCT/DE2006/002251**

(87) Internationale Veröffentlichungsnummer:
**WO 2008/067788 (12.06.2008 Gazette 2008/24)**

(54) **HERSTELLUNG EINES WIRKLEISTUNGSGLEICHGEWICHTS DER PHASENMODULE EINES UMRICHTERS**

PRODUCTION OF AN ACTIVE POWER EQUILIBRIUM OF THE PHASE MODULES OF A CONVERTER

ÉTABLISSEMENT D'UN ÉQUILIBRE DE PUISSANCE ACTIVE ENTRE LES MODULES DE PHASE D'UN CONVERTISSEUR

(84) Benannte Vertragsstaaten:
**AT BE BG CH CY CZ DE DK EE ES FI FR GB GR HU IE IS IT LI LT LU LV MC NL PL PT RO SE SI SK TR**

(43) Veröffentlichungstag der Anmeldung:
**16.09.2009  Patentblatt 2009/38**

(73) Patentinhaber: **Siemens Aktiengesellschaft 80333 München (DE)**

(72) Erfinder:
- **DOMMASCHK, Mike 01945 Guteborn (DE)**
- **DORN, Jörg 96155 Buttenheim (DE)**
- **EULER, Ingo 91056 Erlangen (DE)**
- **LANG, Jörg 85346 Stadtsteinach (DE)**
- **TU, Quoc-Buu 90574 Rosstal (DE)**
- **WÜRFLINGER, Klaus 90419 Nürnberg (DE)**

(56) Entgegenhaltungen:
- **LESNICAR A ET AL: "A new modular voltage source inverter topology"[Online] 2003, XP002454302 Gefunden im Internet: URL:http://www.unibw.de/eit62/forsch/SP/M2 LC/m2lcveroef> [gefunden am 2007-10-10] in der Anmeldung erwähnt**
- **LESNICAR A ET AL: "An innovative modular multilevel converter topology suitable for a wide power range" INSPEC, 2003, XP002447365**
- **MARQUARDT R ET AL: "Modulares Stromrichterkonzept für Netzkupplungsanwendung bei hohen Spa" INTERNET CITATION, [Online] 2002, XP002447360 Gefunden im Internet: URL:www.unibw.de/eit62/forsch/SP/M2LC/m2lc veroef/anle2002bdnau> [gefunden am 2007-10-05] in der Anmeldung erwähnt**
- **MARQUARDT ET AL: "New Concept for High Voltage - Modular Multilevel Converter" POWER ELECTRONICS SPECIALISTS CONFERENCE, 2004. PESC 04. 2004 IEEE 35TH ANNUAL AACHEN, GERMANY 20-25 JUNE 2004, PISCATAWAY, NJ, USA,IEEE, US, 2004, XP002447362 ISBN: 0-7803-8399-0 in der Anmeldung erwähnt**

**Beschreibung**

Die Erfindung betrifft eine Vorrichtung zum Umrichten eines elektrischen Stromes gemäß Anspruch 1. Die Erfindung betrifft weiterhin ein Verfahren zum Umrichten eines Stromes mittels eines Umrichters gemäß Anspruch 10.

Bevorzugte Ausführungsformen sind in den abhängigen Ansprüchen definiert. Eine solche Vorrichtung und ein solches Verfahren sind beispielsweise aus dem Beitrag von A. Lesnicar und R. Marquardt "An Innovative Modular Multilevel Converter Topology Suitable for a Wide Power Range", der auf der Powertech 2003 erschien, bereits bekannt. Dort ist ein Stromrichter offenbart, der für einen Anschluss an ein Wechselspannungsnetz vorgesehen ist. Der Stromrichter weist für jede Phase des mit ihm zu verbindenden Wechselspannungsnetzes ein Phasenmodul auf, wobei jedes Phasenmodul über einen Wechselspannungsanschluss sowie zwei Gleichspannungsanschlüsse verfügt. Zwischen jedem Gleichspannungsanschluss und dem Wechselspannungsanschluss erstrecken sich Phasenmodulzweige, so dass eine so genannte 6-Puls-Brückenschaltung bereitgestellt ist. Die Modulzweige bestehen aus einer Reihenschaltung von Submodulen, die jeweils aus zwei abschaltbaren Leistungshalbleitern bestehen, denen jeweils gegensinnige Freilaufdioden parallel geschaltet sind. Die abschaltbaren Leistungshalbleiter und die Freilaufdioden sind in Reihe geschaltet, wobei parallel zur besagten Reihenschaltung ein Kondensator vorgesehen ist. Die besagten Komponenten der Submodule sind so miteinander verschaltet, dass am zweipoligen Ausgang jedes Submoduls entweder die Kondensatorspannung oder die Spannung null abfällt.

Die Steuerung der abschaltbaren Leistungshalbleiter erfolgt mittels der so genannten Pulsweitenmodulation. Die Regelungsmittel zur Steuerung der Leistungshalbleiter weisen Messsensoren zum Erfassen von Strömen unter Gewinnung von Stromwerten auf. Die Stromwerte werden einer zentralen Steuerungseinheit zugeführt, die eine Eingangsschnittstelle und eine Ausgangsschnittstelle aufweist. Zwischen der Eingangsschnittstelle und der Ausgangsschnittstelle ist ein Modulator, also eine Softwareroutine, vorgesehen. Der Modulator weist unter anderem eine Auswähleinheit sowie einen Pulsweitengenerator auf. Der Pulsweitengenerator erzeugt die Steuersignale für die einzelnen Submodule. Die abschaltbaren Leistungshalbleiter werden durch die vom Pulsweitengenerator erzeugten Steuersignale von einer Durchgangsstellung, in der ein Stromfluss über die abschaltbaren Leistungshalbleiter ermöglicht ist, in eine Sperrstellung überführt, in der ein Stromfluss über die abschaltbaren Leistungshalbleiter unterbrochen ist. Dabei weist jedes Submodul ein Submodulsensor zum Erfassen einer am Kondensator abfallenden Spannung auf.

Weitere Beiträge zum Steuerverfahren für eine so genannte Multi-Level-Stromrichtertopologie sind von R. Marquardt, A. Lesnicar, J. Hildinger, "Modulares Stromrichterkonzept für Netzkupplungsanwendung bei hohen Spannungen", erschienen auf der ETG-Fachtagung in Bad Nauenheim, Deutschland 2002, von A. Lesnicar, R. Marquardt, "A new modular voltage source inverter topology", EPE' 03 Toulouse, Frankreich 2003 und von R. Marquardt, A. Lesnicar "New Concept for High Voltage - Modular Multilevel Converter", PESC 2004 Conference in Aachen, Deutschland, bekannt.

Aus der derzeit noch unveröffentlichten deutschen Patentanmeldung 10 2005 045 090.3 ist ein Verfahren zur Steuerung eines mehrphasigen Stromrichters mit verteilten Energiespeichern offenbart. Die offenbarte Vorrichtung weist ebenfalls eine Multi-Level-Stromrichtertopologie mit Phasenmodulen auf, die über einen symmetrisch in der Mitte jedes Phasenmoduls angeordneten Wechselspannungsanschluss und zwei Gleichspannungsanschlüsse verfügen. Jedes Phasenmodul ist aus zwei Phasenmodulzweigen zusammengesetzt, die sich zwischen dem Wechselspannungsanschluss und einem der Gleichspannungsanschlüsse erstrecken. Jeder Phasenmodulzweig umfasst wiederum eine Reihenschaltung aus Submodulen, wobei jedes Submodul aus abschaltbaren Leistungshalbleitern und diesen antiparallel geschalteten Freilaufdioden besteht. Ferner verfügt jedes Submodul über einen unipolaren Kondensator. Zur Regelung der Leistungshalbleiter dienen Regelungsmittel, die auch zum Einstellen von Zweigströmen eingerichtet sind, welche zwischen den Phasenmodulen fließen. Durch die Steuerung der Zweigströme können beispielsweise Stromschwingungen aktiv gedämpft und Betriebspunkte mit kleineren Ausgangsfrequenzen vermieden werden. Darüber hinaus kann eine gleichmäßige Belastung aller abschaltbaren Halbleiterschalter sowie eine Symmetrierung von stark unsymmetrischen Spannungen herbeigeführt werden.

Die eingangs genannte Vorrichtung weist den Nachteil auf, dass die Wirkleistungsaufnahme eines Phasenmodulzweiges nicht immer genau den Verlusten entspricht. Auf diese Weise kann es zu unsymmetrischen Verteilung der in einem Phasenmodulzweig jeweils gespeicherten Energie kommen. Die Kondensatoren der Submodule werden daher unterschiedlich stark belastet mit unerwünschten Begleiterscheinungen im Gefolge.

Aufgabe der Erfindung ist es daher, eine Vorrichtung und ein Verfahren der eingangs genannten Art bereitzustellen, mit dem eine unsymmetrische Belastung der Energiespeicher der Submodule vermieden ist.

Die Erfindung löst diese Aufgabe ausgehend von der eingangs genannte Vorrichtung dadurch, dass die Regelungsmittel eine Summationseinheit zum Aufsummieren der Energiespeicherenergiewerte unter Gewinnung von Zweigenergieistwerten und Mittel zum Berechnen von Kreisstromsollwerten Dvb, Dhgl, Dhge in Abhängigkeit der Zweigenergieistwerte aufweisen, wobei die Regelungsmittel zum Ausgleich von Unsymmetrien bei den Zweigenergieistwerten in Abhängigkeit der Kreisstromsollwerte Dvb, Dhgl, Dhge eingerichtet sind.

Ausgehend von dem eingangs genannten Verfahren löst die Erfindung die Aufgabe dadurch dass, die in jedem Energiespeicher gespeicherte Energie unter Gewinnung eines Energiespeicherenergiewertes erfasst, alle Energiespeicherenergiewerte eines Phasenmodulzweiges unter Gewinnung von Zweigenergieistwerten aufsummiert werden und in Abhängigkeit der Zweigenergieistwerte Kreisstromsollwerte bestimmt werden, wobei in Abhängigkeit der Kreisstromsollwerte Kreisströme in den Phasenmodulen zum Ausgleich von Unsymmetrien erzeugt werden.

Im Rahmen der Erfindung sind die Regelungsmittel zum Ausgleich von Asymmetrien hinsichtlich der in den Submodulen gespeicherten Elektroenergie eingerichtet. Dazu wird zunächst die in allen Energiespeichern gespeicherte Energie für jeden Phasenmodulzweig ermittelt. Dies geschieht durch Aufsummieren von Energiespeicherenergiewerten, die jeweils einer in dem Energiespeicher eines Submoduls gespeicherten Energie entsprechen. Aus der Summe der Energiespeicherenergiewerte ergeben sich Zweigenergieistwerte, die einer Summe der Energien sämtlicher Energiespeicher eines Phasenmodulzweiges entsprechen. Durch Vergleich der Zweigenergieistwerte wird im Rahmen der Erfindung eine Asymmetrie festgestellt. Zum Ausgleich der Asymmetrie werden schließlich mittels einer Regelung Kreisströme erzeugt. Hierzu dienen die Kreisstromsollwerte Dvb, Dhgl, Dhge, die in Abhängigkeit des Unterschiedes der Zweigenergieistwerte bestimmt werden. Die Kreisstromsollwerte werden schließlich den Regelungsmitteln zugeführt, die auf der Grundlage der Kreisstromsollwerte Dvb, Dhgl, Dhge die zum Ausgleich der Unsymmetrien notwendigen Kreisströme erzeugen. Auf diese Weise ist für eine symmetrische Belastung der Submodule gesorgt.

Als Energiespeicherenergiewert eines Submoduls dient beispielsweise ein Energiespeicherspannungswert, der durch Messen der an dem Energiespeicher abfallenden Spannung gewonnen wird. Abweichend hiervon dient das Quadrat des Energiespeicherspannungswertes als Energiespeicherenergiewert. Grundsätzlich kann jeder Wert, der als Maß für die in dem jeweiligen Energiespeicher gespeicherte Energie dienen kann im Rahme der Erfindung verwendet werden.

Der Energiespeicher eines Submoduls kann im Rahmen der Erfindung auch aus mehreren Subenergiespeichern zusammengesetzt sein. Der Energiespeicherenergiewert ist dann die Summe der Subenergiespeicherenergiewerte.

Zweckmäßigerweise umfassen die Regelungsmittel einen Regler, an dessen Eingang die Kreisstromsollwerte Dvb, Dhgl, Dhge anliegen und an dessen Ausgang Kreisspannungssollwerte abgegriffen werden. Der Regler ist beispielsweise ein Proportionalregler. Die Regelungsmittel umfassen ferner eine Stromregeleinheit, die verschiedene Spannungssollwerte einschließlich der Kreisspannungssollwerte linear, also durch Aufsummieren und Differenzbilden, miteinander kombiniert. Das Ergebnis dieser Linearkombination von Spannungssollwerten sind Zweigspannungssollwerte, die jeweils einem Phasenmodulzweig zugeordnet sind. Der oder die Zweigspannungssollwerte werden Ansteuereinheiten zugeführt, die ebenfalls einem Phasenmodulzweig zugeordnet sind.

Vorteilhafterweise weist die erfindungsgemäße Vorrichtung einen positiven und einen negativen Gleichspannungsanschluss auf, wobei Summationsmittel die Zweigenergieistwerte der Phasenmodulzweige, die mit dem positiven Gleichspannungsanschluss verbunden sind, zu einer positiven Zweigsumme und die Zweigenergieistwerte der Phasenmodulzweige, die mit dem negativen Gleichspannungsanschluss verbunden sind, zu einer negativen Zweigsumme aufsummieren und Differenziermittel, die Differenz aus der positiven und der negativen Zweigsummen unter Gewinnung eines Vertikalkreisstromsollwertes Dvb zum Ausgleich einer vertikalen Unsymmetrie bilden. Eine vertikale Unsymmetrie besteht dann, wenn die Phasenmodulzweige, die mit dem positiven Gleichspannungsanschluss verbunden sind, mehr oder weniger Energie aufgenommen haben, als die Phasenmodulzweige, die mit dem negativen Gleichspannungsanschluss verbunden sind. Eine vertikale Unsymmetrie kann daher durch Vergleich der Zweigenergieistwerte festgestellt werden, wobei die Zweigsumme der Phasenmodulzweige, die mit dem positiven Gleichspannungsanschluss verbunden sind, von der Zweigsumme der Phasenmodulzweige abgezogen wird, die mit dem negativen Gleichspannungsanschluss verbunden ist. Die sich ergebende Differenz stellt ein Maß für die vertikale Unsymmetrie dar, so dass auf diese Weise ein Sollwert für die Regelung zum Ausgleich der vertikalen Unsymmetrie herleitbar ist.

Gemäß einer diesbezüglich zweckmäßigen Weiterentwicklung weist die erfindungsgemäße Vorrichtung Mittel zum Erzeugen einer netzfrequenten Mitsystemsollspannung Uvb1,2,3 in Abhängigkeit des Vertikalkreisstromsollwertes Dvb zum Ausgleich der vertikalen Unsymmetrie auf. Die netzfrequente Mitsystemsollspannung Uvb1,2,3 bezieht sich auf die Phasenlage der mehrphasigen Wechselspannung des angeschlossenen Netzes. Bei einem netzfrequenten Mitsystem dreht sich in der Zeigerdarstellung die erzeugte Spannung in der gleichen Drehrichtung wie die Zeiger der Wechselspannung des angeschlossenen Netzes. Die Mitsystemsollspannung wird, wie zuvor beschrieben, durch die Regelungsmittel anderen Spannungssollwerten aufgeschaltet.

Abweichend hiervon können Mittel zum Erzeugen einer Asymmetriespannung Uasym in Abhängigkeit der Kreisstromsollwerte Dvb zum Ausgleich der vertikalen Unsymmetrie vorgesehen sein. Solche Mittel zum Erzeugen einer Asymmetriespannung sind beispielsweise einfache Regler, an deren Eingang die Kreisstromsollwerte anliegen, wobei am Ausgang des Reglers die Asymmetriespannung Uasym erhältlich ist. Bei dem Regler handelt es sich beispielsweise um einen einfachen Proportionalregler.

Vorteilhafterweise sind Mittel zum Nachweis einer gleichsinnigen horizontalen Unsymmetrie vorgesehen, wobei die besagten Mittel Kreisstromsollwerte Dhgl in Abhängigkeit der nachgewiesenen gleichsinnigen horizontalen Unsymmetrie erzeugen. Neben einer vertikalen Unsymmetrie sind auch horizontale Unsymmetrien möglich und zwar dann, wenn die Zweigenergieistwerte der Phasenmodulzweige, die mit dem positiven Gleichspannungsanschluss verbunden sind, unterschiedlich groß sind. Dies gilt entsprechend für die Zweigenergieistwerte der Phasenmodulzweige, die mit dem negativen Gleichspannungsanschluss verbunden sind. Eine gleichsinnige horizontale Unsymmetrie liegt vor, wenn die Unsymmetrie zwischen den positiven Phasenmodulzweigen gleich der Unsymmetrie zwischen den negativen Phasenmodulzweigen ist. Eine gegensinnige horizontale Unsymmetrie entsteht hingegen, wenn die Unsymmetrie unter den positiven Phasenmodulzweigen invers zur Unsymmetrie unter den negativen Phasenmodulzweigen ist.

Die erfindungsgemäße Vorrichtung weist daher vorteilhafterweise Mittel zum Nachweis einer gleichsinnigen horizontalen Unsymmetrie auf, wobei die besagten Mittel Kreisstromsollwerte Dhgl in Abhängigkeit der nachgewiesenen gleichsinnigen horizontalen Unsymmetrie erzeugen.

Gemäß einer diesbezüglich zweckmäßigen Weiterentwicklung sind Mittel zum Erzeugen von Kreisspannungssollwerten uhgl vorgesehen, die jeweils einem Phasenmodul zugeordnet sind. Die Kreisspannungssollwerte uhgl werden von den Regelungsmitteln anderen Spannungssollwerten aufgeschaltet.

Vorteilhafterweise sind im Rahmen der Erfindung Mittel zum Nachweis einer gegensinnigen horizontalen Unsymmetrie vorgesehen, wobei die besagten Mittel Kreisstromsollwerte Dhge in Abhängigkeit der nachgewiesenen gegensinnigen horizontalen Unsymmetrie erzeugt.

Gemäß einer diesbezüglich zweckmäßigen Weiterentwicklung sind Mittel zum Erzeugen eines netzfrequenten Gegenspannungssystems ughe in Abhängigkeit der nachgewiesenen gegensinnigen horizontalen Unsymmetrie vorgesehen. Das netzfrequente Gegenspannungssystem zeichnet sich durch eine Spannung aus, deren Zeiger im Zeigermodell entgegen der Richtung des Wechselspannungsnetzes rotiert.

Gemäß einem anderen Ausführungsbeispiel sind Mittel zur zeitgleichen Kompensation von vertikalen und horizontalen gegensinnigen Unsymmetrien vorgesehen.

Gemäß einer zweckmäßigen Weiterentwicklung des erfindungsgemäßen Verfahrens werden die Zweigenergieistwerte aller Phasenmodule, die mit einem positiven Gleichspannungsanschluss verbunden sind, unter Gewinnung einer positiven Gesamtsumme und die Zweigenergieistwerte aller Phasenmodulzweige, die mit einem negativen Gleichspannungsanschluss verbunden sind, unter Gewinnung einer negativen Gesamtsumme aufsummiert, wobei die Differenz zwischen der positiven und der negativen Gesamtsumme unter Gewinnung eines vertikalen Kreisromsollwertes Dvb gebildet wird. Auf diese Weise kann eine vertikale Unsymmetrie festgestellt werden und mit Hilfe des Kreisstromsollwertes quantifiziert werden.

Vorteilhafterweise wird ausgehend von dem vertikalen Kreisstromsollwert eine netzfrequente Mitsystemsollspannung erzeugt. Der Gleichstromsollwert geht dabei vorteilhafterweise als Amplitude einer periodischen Funktion ein.

Abweichend davon wird ausgehend von dem vertikalen Kreisstromsollwert Dvb mittels eines Proportionalreglers eine Asymmetriesollspannung erzeugt.

Das Feststellen einer gleichsinnigen horizontalen Unsymmetrie erfolgt beispielsweise durch Bilden der Zweigenergieistwerte aller Phasenmodulzweige eines Phasenmoduls unter Gewinnung von Phasenmodulenergiesummenwerten, durch Bilden des Mittelwertes aller Phasenmodulenergiesummenwerte und durch Bilden von Differenzen aus dem besagten Mittelwert und jedem Phasenmodulenergiesummenwert unter Gewinnung von gleichsinnigen horizontalen Unsymmetriestromsollwerten.

Gemäß einer diesbezüglich zweckmäßigen Weiterentwicklung werden aus den gleichsinnigen horizontalen Unsymmetriestromsollwerten Dhgl mittels eines Reglers Kreisspannungssollwerte gebildet, die als Sollspannung von den Regelungsmitteln anderen Spannungssollwerten aufgeschaltet werden.

Gemäß einer weiteren Ausgestaltung der Erfindung werden die Zweigenergieistwerte aller Phasenmodulzweige eines Phasenmoduls unter Gewinnung von Phasenmodulenergiedifferenzwerten, die jeweils einer Phase zugeordnet sind, voneinander abgezogen. Anschließend wird der Mittelwert der Phasenmodulenergiedifferenzwerte über alle Phasen berechnet und für jede Phase die Differenz aus dem besagten Mittelwert und dem jeweiligen Phasenmodulenergiedifferenzwert unter Gewinnung von gegensinnigen horizontalen Unsymmetriestromsollwerten Dhge1, Dhge2, Dhge3 ermittelt.

Gemäß einer diesbezüglichen Weiterentwicklung wird das aus den gegensinnigen horizontalen Unsymmetriestromsollwerten Dhge1, Dhge2, Dhge3 ein netzfrequentes Gegenspannungssystem uhge1, uhge2, uhge3 ermittelt.

Vorteilhafterweise wird der Zweigenergieistwert eines Phasenmodulzweiges, der mit einem negativen Gleichspannungsanschluss verbunden ist, von dem Zweigenergieistwert des Phasenmodulzweiges des gleichen Phasenmoduls, der mit dem positiven Gleichspannungsanschluss verbunden ist, unter Gewinnung einer Phasenzweigmoduldifferenz abgezogen, wobei die Phasenzweigmoduldifferenz als Amplitude einer periodischen Funktion dient, die mit der Netzfrequenz schwingt und einem Phasenmodul zugeordnet ist, wobei die periodischen Funktionen der anderen Phasenmodule jeweils phasenverschoben sind, so dass eine Mitsystemsollspannung gebildet ist. Die Mitsystemsollspannung wird wieder anderen Sollwerten der Regelung aufgeschaltet.

Weitere zweckmäßige Ausgestaltungen und Vorteile sind Gegenstand der nachfolgenden Beschreibung von Ausführungsbeispielen der Erfindung unter Bezug auf die Figuren der Zeichnung, wobei gleiche Bezugszeichen auf gleich wirkende Bauteile verweisen und wobei

Figur 1    ein Ausführungsbeispiel einer erfindungsgemäßen Vorrichtung in einer schematischen Darstellung zeigt,

Figur 2    eine Ersatzbilddarstellung eines Submoduls einer Vorrichtung gemäß Figur 1 zeigt,

Figur 3    ein Verfahren zum Feststellen einer vertikalen Unsymmetrie verdeutlicht,

Figur 4    das Erzeugen einer netzfrequenten Mitsystemspannung verdeutlicht,

Figur 5    das Erzeugen einer Asymmetriespannung verdeutlicht,

Figur 6    den Nachweis einer gleichsinnigen horizontalen Unsymmetrie verdeutlicht,

Figur 7    den Nachweis einer gegensinnigen vertikalen Unsymmetrie verdeutlicht,

Figur 8    eine Methode zum Erzeugen von Unsymmetriespannungen verdeutlicht,

Figur 9    ein Verfahren zum Erzeugen einer netzfrequenten Gegensystemspannung darstellt,

Figur 10   Mittel zum zeitgleichen Kompensieren von vertikalen und horizontalen gegensinnigen Unsymmetrien darstellt,

Figur 11   die Struktur der Regelungsmittel der Vorrichtung gemäß Figur 1 zeigt und

Figur 12   das Aufschalten von Kreisspannungssollwerten zu anderen Sollwerten der Regelungsmittel verdeutlicht.

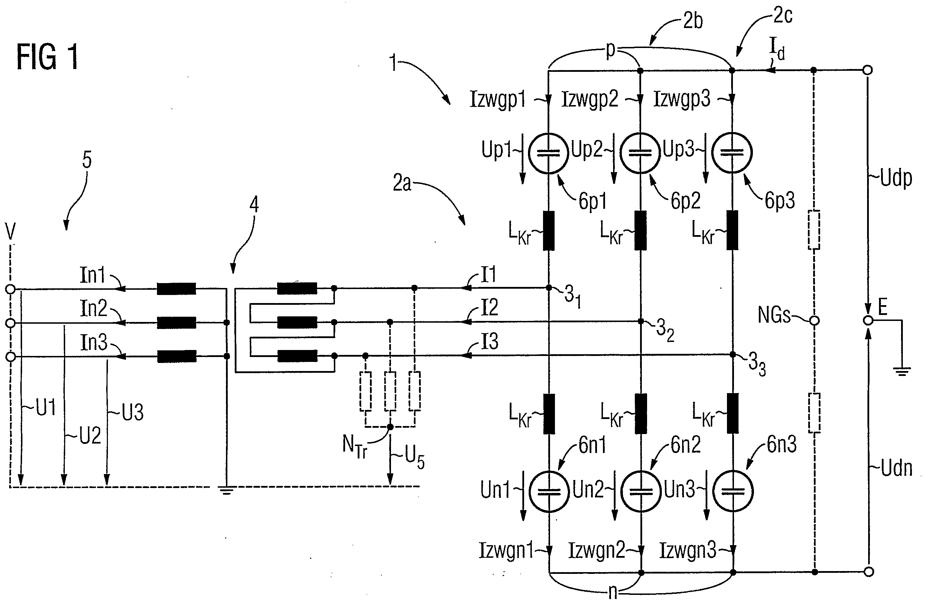

Figur 1 zeigt ein Ausführungsbeispiel der erfindungsgemäßen Vorrichtung 1, die aus drei Phasenmodulen 2a, 2b und 2c zusammengesetzt ist. Jedes Phasenmodul 2a, 2b und 2c ist mit einer positiven Gleichspannungsleitung p sowie mit einer negativen Gleichspannungsleitung n verbunden, so dass jedes Phasenmodul 2a,2b,2c zwei Gleichspannungsanschlüsse aufweist. Ferner ist für jedes Phasenmodul 2a, 2b und 2c jeweils ein Wechselspannungsanschluss $3_1$, $3_2$ und $3_3$ vorgesehen. Die Wechselspannungsanschlüsse $3_1$, $3_2$

und $3_3$ sind über einen Transformator 4 mit einem dreiphasigen Wechselspannungsnetz 5 verbunden. An den Phasen des Wechselspannungsnetzes 5 fallen die Phasenspannungen U1, U2 und U3 ab, wobei Netzströme In1, In2 und In3 fließen. Der wechselspannungsseitige Phasenstrom eines jeden Phasenmoduls wird mit I1, I2 und I3 bezeichnet. Der Gleichspannungsstrom ist $I_d$. Zwischen jedem der Wechselspannungsanschlüsse $3_1$, $3_2$ oder $3_3$ und der positiven Gleichspannungsleitung p erstrecken sich Phasenmodulzweige 6p1, 6p2 und 6p3. Zwischen jedem Wechselspannungsanschluss $3_1, 3_2, 3_3$ und der negativen Gleichspannungsleitung n sind die Phasenmodulzweige 6n1, 6n2 und 6n3 ausgebildet. Jeder Phasenmodulzweig 6p1, 6p2, 6p3, 6n1, 6n2 und 6n3 besteht aus einer Reihenschaltung aus in Figur 1 nicht ausführlich dargestellten Submodulen und einer Induktivität, die in Figur 1 mit $L_{Kr}$ bezeichnet ist.

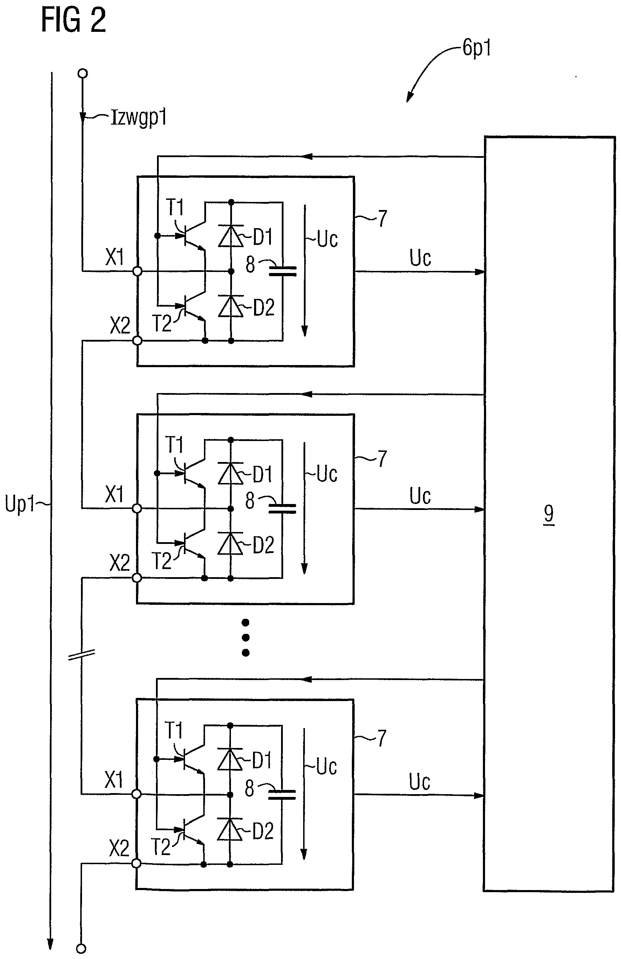

In Figur 2 ist die Reihenschaltung der Submodule 7 und insbesondere der Aufbau der Submodule durch ein elektrisches Ersatzschaltbild genauer dargestellt, wobei in Figur 2 lediglich der Phasenmodulzweig 6p1 herausgegriffen wurde. Die restlichen Phasenmodulzweige sind jedoch identisch aufgebaut. Es ist erkennbar, dass jedes Submodul 7 zwei in Reihe geschaltete abschaltbare Leistungshalbleiter T1 und T2 aufweist. Abschaltbare Leistungshalbleiter sind beispielsweise so genannte IGBTs, GTOs, IGCTs oder dergleichen. Diese sind dem Fachmann als solche bekannt, so dass eine ausführliche Darstellung an dieser Stelle entfallen kann. Jedem abschaltbaren Leistungshalbleiter T1, T2 ist eine Freilaufdiode D1, D2 antiparallel geschaltet. Parallel zur Reihenschaltung der abschaltbaren Leistungshalbleiter T1, T2 beziehungsweise der Freilaufdioden D1 und D2 ist ein Kondensator 8 als Energiespeicher geschaltet. Jeder Kondensator 8 ist unipolar aufgeladen. An den zweipoligen Anschlussklemmen X1 und X2 jedes Submoduls 7 können nunmehr zwei Spannungszustände erzeugt werden. Wird von einer Ansteuereinheit 9 beispielsweise ein Ansteuersignal erzeugt, mit dem der abschaltbare Leistungshalbleiter T2 in seine Durchgangsstellung überführt wird, in der ein Stromfluss über den Leistungshalbleiter T2 ermöglicht ist, fällt an den Klemmen X1, X2 des Submoduls 7 die Spannung null ab. Dabei befindet sich der abschaltbare Leistungshalbleiter T1 in seiner Sperrstellung, in der ein Stromfluss über den abschaltbaren Leistungshalbleiter T1 unterbrochen ist. Dies verhindert die Entladung des Kondensators 8. Wird hingegen der abschaltbare Leistungshalbleiter T1 in seine Durchgangsstellung, der abschaltbare Leistungshalbleiter T2 jedoch in seine Sperrstellung überführt, liegt an den Klemmen X1, X2 des Submoduls 7 die volle Kondensatorspannung Uc an.

Das Ausführungsbeispiel der erfindungsgemäßen Vorrichtung gemäß Figur 1 und 2 wird auch als so genannter Multi-Level-Stromrichter bezeichnet. Ein solcher Multi-Level-Stromrichter ist beispielsweise zum Antrieb elektrischer Maschinen, wie beispielsweise Motoren oder dergleichen, geeignet. Darüber hinaus eignet sich ein solcher Multilevelstromrichter auch für einen Einsatz im Bereich der Energieverteilung und -übertragung. So dient die erfindungsgemäße Vorrichtung beispielsweise als Kurzkupplung, die aus zwei gleichspannungsseitig miteinander verbundenen Stromrichtern besteht, wobei die Stromrichter jeweils mit einem Wechselspannungsnetz verbunden sind. Solche Kurzkupplungen werden zum Energieaustausch zwischen zwei Energieverteilungsnetzen eingesetzt, wobei die Energieverteilungsnetze beispielsweise eine unterschiedliche Frequenz, Phasenlage, Sternpunktbehandlung oder dergleichen aufweisen. Darüber hinaus kommen Anwendungen im Bereich der Blindleistungskompensation, als so genannte FACTS (Flexible AC Transmission Systems) in Betracht. Auch die Hochspannungsgleichstromübertragung über lange Strecken hinweg ist mit solchen Multilevelstromrichtern denkbar.

Um eine unsymmetrische Verteilung der Energie auf die Submodule 7, also auf die Kondensatoren 8 der Submodule 7, zu vermeiden, wird im Rahmen der Erfindung zunächst festgestellt, ob Unsymmetrien vorliegen.

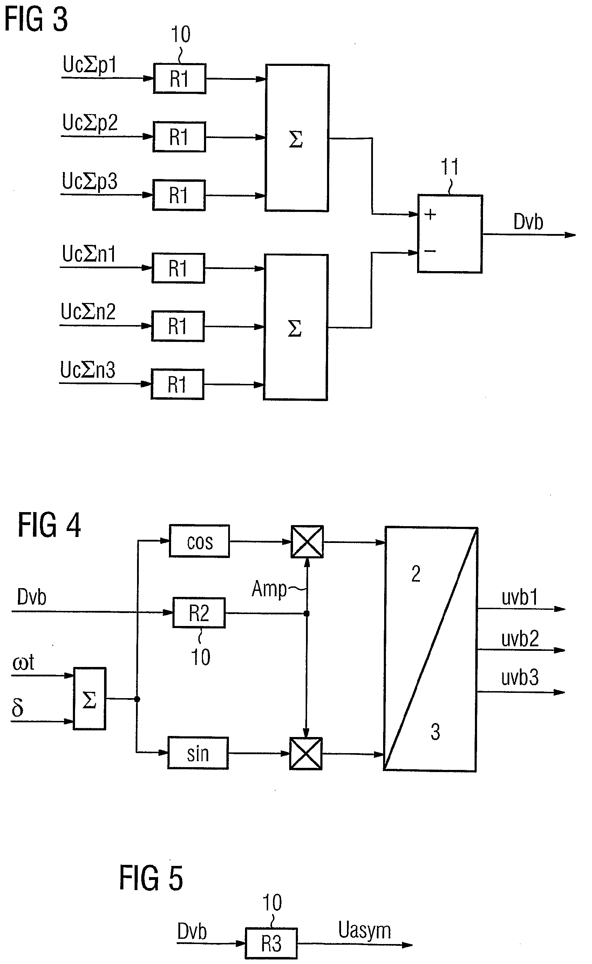

Figur 3 verdeutlicht schematisch ein Verfahren zum Detektieren einer vertikalen Unsymmetrie. Hierzu werden zunächst von jedem Phasenmodulzweig 6p1,...,6n3 die Zweigenergieistwerte Uc∑p1,...,Uc∑n3 ermittelt. Dies erfolgt durch Messen der am Kondensator 8 abfallenden Spannung Uc für jedes Submodul 7. Wie in Figur 2 durch den nach rechts weisenden Pfeil gezeigt ist, wird der von dem Spannungssensor erfasste Kondensatorspannungswert Uc an die Auswerteeinheit 9 übertragen. Die Auswerteeinheit 9 summiert alle Kondensatorspannungswerte Uc eines Phasenmodulzweiges 6p1,...,6n3 zu Zweigenergieistwerten Uc∑p1,...,Uc∑n3 auf. Hierbei ist es unerheblich, ob das Submodul der Reihenschaltung zugeschaltet ist und einen Beitrag liefert oder nicht. Um ein Maß für die gespeicherte Energie zu bekommen ist es auch möglich, die an den Kondensatoren abfallende Spannung Uc zu $Uc^2$ zu quadrieren und $Uc^2$ anschließend zu den Zweigenergieistwerten aufzusummieren.

Die Zweigenergieistwerte entsprechen hier also Zweigspannungsistwerten Uc∑p1,...,Uc∑n3. Diese werden jeweils durch einen Proportionalregler 10 zu Zwischenwerten umgewandelt und die Zwischenwerte der Phasenmodulzweige 6p1,6p2,6p3, die mit dem positiven Gleichspannungsanschluss p verbunden sind, miteinander aufsummiert. Entsprechend wird mit den Zwischenwerten der Phasenmodulzweige 6n1,6n2,6n3, die mit dem negativen Gleichspannungsanschluss n verbunden sind, verfahren. Auf diese Weise entsteht eine positive Zweigsumme sowie eine negative Zweigsumme, die mittels des Differenzbildners 11 voneinander abgezogen werden, wodurch der Kreisstromsollwert Dvb zum Ausgleich einer vertikalen Unsymmetrie gebildet wird.

Figur 4 verdeutlicht die Erzeugung einer netzfrequenten Mitsystemsollspannung. Zunächst wird sowohl eine Sinusfunktion als auch eine Kosinusfunktion mit dem Argument von ωt unter Zusatz einer Phasenverschiebung δ gebildet. ω entspricht hierbei der Frequenz der Spannung des angeschlossenen Netzes. Die Kosinus- beziehungsweise die Sinusfunktion werden jeweils mit einer Amplitude multipliziert, die aus dem Kreisstromsollwert Dvb unter Einsatz eines Proportionalreglers 10 gebildet wird. Durch die anschließende Umwandlung vom zweidimensionalen Vektorraum in den dreidimensionalen Raum ergibt sich die netzfrequente Mitsystemsollspannung uvb1, uvb2 und uvb3. Diese wird anderen Sollspannungen in einer Stromregeleinheit aufgeschaltet.

Ausgehend von dem gemäß Figur 3 gebildeten Kreisstromsollwert Dvb ist anstelle der Erzeugung einer netzfrequenten Mitsystemsollspannung auch die Erzeugung einer Asymmetriespannung Uasym möglich. Hierzu wird wie in Figur 5 gezeigt ist die Kreisstromsollwert Dvb an den Eingang eines Reglers 10 gelegt, bei dem es sich beispielsweise um einen Proportionalregler handelt. Am Ausgang des Reglers 10 kann die Asymmetriespannung Uasym abgegriffen werden.

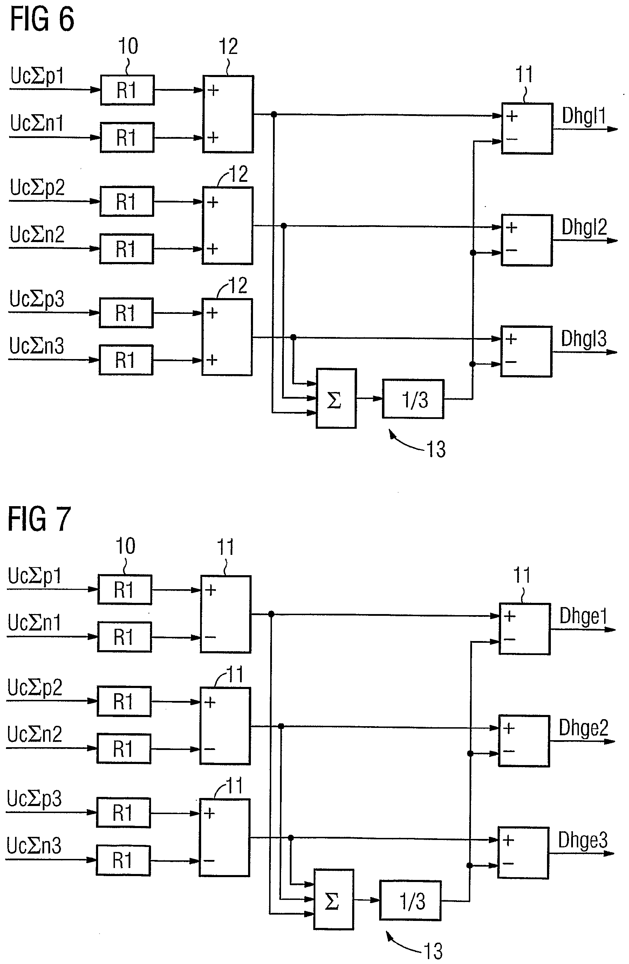

Figur 6 verdeutlicht den Nachweis einer horizontalen gleichsinnigen Unsymmetrie. Hierzu werden die Zweigenergieistwerte Uc∑p1,...,Uc∑n3 der Phasenmodulzweige 6p1,...6n3 desselben Phasenmoduls 2a,2b,2c jeweils zu Phasenmodulenergiesummenwerten aufaddiert, wobei die Zweigenergieistwerte zuvor durch den Regler 10 proportional zu Zwischenwerten verstärkt werden. Zum Aufaddieren dient ein Addierer 12. Aus den Phasenmodulenergiesummenwerten am Ausgang des Addierers 12 wird dem Mittelwertbildner 13 der Mittelwert gebildet und von jedem Phasenmodulenergiesummenwert einer Phase durch Differenzbildner 11 abgezogen. Am Ausgang jedes Differenzbildners 11 können vertikale Kreisstromsollwerte Dhgl1, Dhgl2, Dhgl3 für jede Phase abgegriffen werden.

Figur 7 verdeutlicht, wie eine gegensinnige horizontale Unsymmetrie nachgewiesen werden kann. Hierzu werden die Zweigenergieistwerte Uc∑p1,...,Uc∑n3 zunächst wieder durch einen Regler 10 verstärkt. Anschließend wird im Gegensatz zu dem in Figur 6 gezeigten Verfahren die Differenz zwischen Zweigenergieistwerten Uc∑p1,Uc∑n1 der Phasenmodulzweige des gleichen Phasenmoduls 2a,2b,2c berechnet. Aus der Differenz wird wieder der Mittelwert über alle drei Phasen gebildet, wobei der Mittelwert von der besagten Differenz abgezogen wird. Am Ausgang des zweiten Differenzbildners 11 kann schließlich der gegensinnige horizontale Unsymmetriestromsollwert Dhge1, Dhge2 und Dhge3 für jede Phase abgegriffen werden.

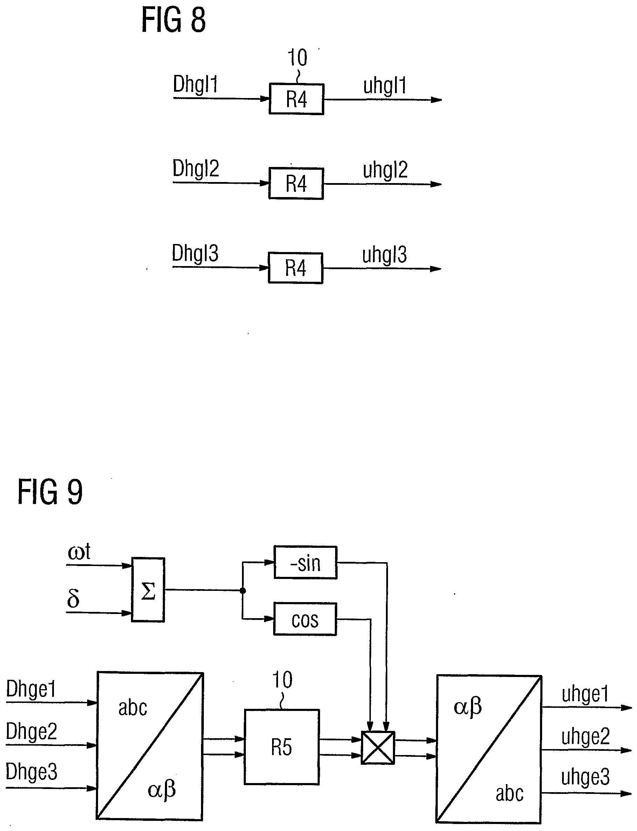

Figur 8 verdeutlicht, wie aus den Kreisstromsollwerten Dghl1, Dghl2, Dghl3 durch einen Proportionalregler 10 Kreisspannungssollwerte uhgl1, uhgl2 und uhgl3 erzeugt werden. Diese Kreisspannungssollwerte werden, wie zuvor beschrieben, in die Regelung eingespeist, so dass sich die gewünschten Kreisströme zum Ausgleich der Symmetrien einstellen.

Figur 9 verdeutlicht die Erzeugung einer netz-

frequenten Gegensystemspannung uhge1, uhge2 und uhge3. Ausgehend von den gegensinnigen horizontalen Unsymmetriestromsollwerten Dhge1, Dhge2 und Dhge3. Die besagten Unsymmetriestromsollwerte werden zunächst in dem zweidimensionalen Vektorraum transformiert und anschließend durch einen Regler 10 proportional verstärkt. Die verstärkten Unsymmetriesollwerte dienen als Amplitude einer Kosinusfunktion und einer negativen Sinusfunktion mit dem Argument $\omega t$ und der Phasenverschiebung $\delta$. Nach der Transformation in den dreidimensionalen Raum erhält man die netzfrequente Gegensystemsollspannung uhge1,ughe2,uhge3 zum Einspeisen in die Stromregelungseinheit und zum Aufschalten auf weiter Sollwerte der Regelung.

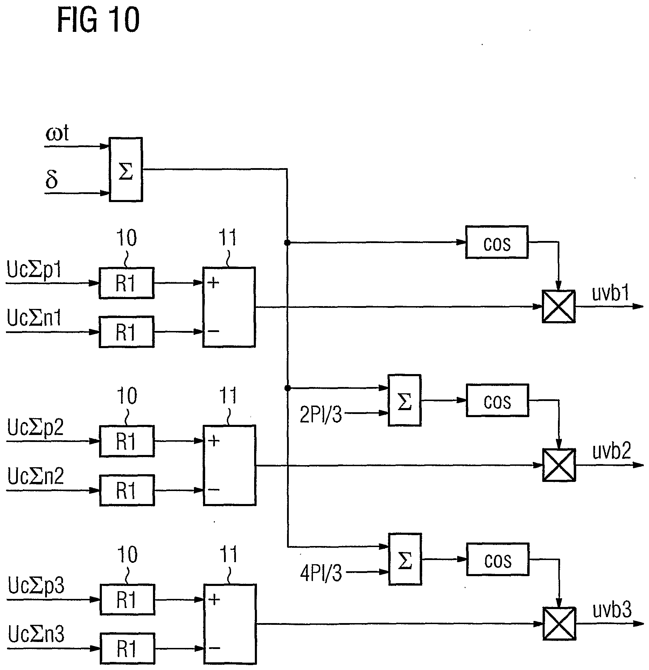

Figur 10 verdeutlicht Mittel zur zeitgleichen Kompensation von vertikalen Unsymmetrien und horizontalen gegensinnigen Unsymmetrien. Wie im Zusammenhang mit Figur 7 beschrieben, werden zunächst Zweigenergieistwerte Uc$\sum$p1,...,Uc$\sum$n3 der Phasenmodulzweige 6p1,...6n3 eines gemeinsamen Phasenmoduls durch einen Regler 10 proportional verstärkt und anschließend die Differenz in dem Differenzbildner 11 gebildet. Parallel hierzu werden Kosinusfunktionen gebildet, die von der Netzfrequenz $\omega$ und von der Phase $\delta$ abhängen. Die phasenweise gebildeten Kosinusfunktionen sind um $\frac{2\pi}{3}$ zueinander phasenverschoben. Die phasenverschobenen Kosinusfunktionen werden mit der sich am Ausgang des Differenzbildners 11 ergebenden Phasenzweigmoduldifferenz als Amplitude multipliziert, so dass sich eine Mitsystemsollspannung uvb1, uvb2 und Uub3 ergibt.

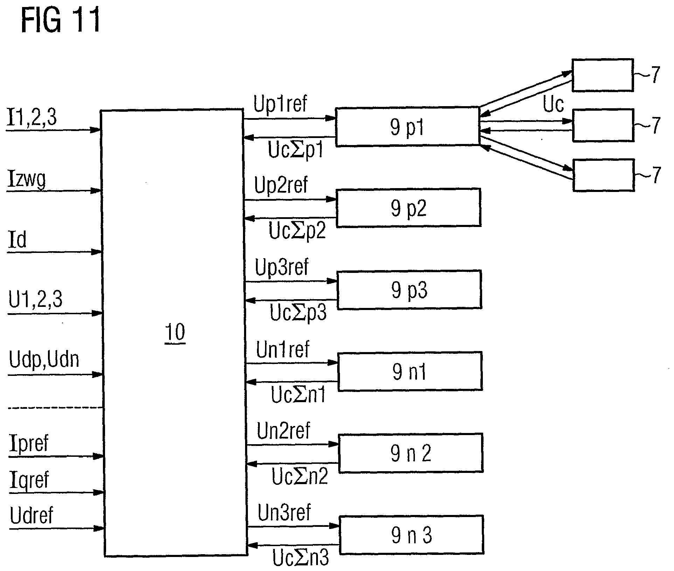

Figur 11 verdeutlicht die Struktur der Regelungsmittel. Die Regelungsmittel umfassen eine Stromregeleinheit 10 sowie Ansteuereinheiten 9p1, 9p2, 9p3 und 9n1 und 9n2 und 9n3. Jede der Ansteuereinheiten ist einem Phasenmodulzweig 6p1, 6p2, 6p3, 6n1, 6n2 beziehungsweise 6n3 zugeordnet. Die Ansteuereinheit 9p1 ist beispielsweise mit jedem Submodul 7 des Phasenmodulzweiges 6p1 verbunden und erzeugt die Steuersignale für die abschaltbaren Leistungshalbleiter T1, T2. In jedem Submodul 7 ist ein figürlich nicht dargestellter Submodulspannungssensor vorgesehen. Der Submodulspannungssensor dient zur Erfassung der an dem Kondensator 8 als Energiespeicher des Submoduls 7 abfallenden Kondensatorspannung unter Gewinnung eines Kondensatorspannungswertes Uc. Der Kondensatorspannungswert Uc wird der jeweiligen Ansteuereinheit, hier 9p1, zur Verfügung gestellt. Die Ansteuereinheit 9p1 erhält somit die Kondensatorspannungswerte sämtlicher Submodule 7 des ihr zugeordneten Phasenmodulzweiges 6p1 und summiert diese zum Erhalt eines Zweigenergieistwertes oder hier Zweigspannungsistwert Uc$\sum$p1, der ebenfalls dem Phasenmodulzweig 6p1 zugeordnet ist. Dieser Zweigspannungsistwert Uc$\sum$p1 wird der Stromregeleinheit 10 zugeführt.

Im Übrigen ist die Stromregeleinheit 10 mit verschiedenen figürlich nicht dargestellten Messsensoren verbunden. So dienen wechselspannungsseitig der Phasenmodule 2a, 2b, 2c angeordnete Stromwandler zum Erzeugen und Zuführen von Phasenstrommesswerten I1, I2, I3 und an jedem Phasenmodul angeordnete Stromwandler zum Erzeugen und Zuführen von Phasenmodulzweigströmen Izwg sowie ein im Gleichspannungskreis des Stromrichters angeordnete Stromwandler zum Bereitstellen von Gleichstrommesswerten Id. Spannungswandler des Wechselstromnetzes stellen Netzspannungsmesswerte U1, U2, U3 und Gleichspannungswandler positive Gleichspannungsmesswerte Udp und negative Gleichspannungsmesswerte Udn bereit, wobei die positiven Gleichspannungswerte Udp, einer zwischen dem positiven Gleichspannungsanschluss p und Erde abfallenden Gleichspannung und die negativen Gleichspannungswerte Udn, einer zwischen dem negativen Gleichspannungsanschluss und Erde abfallenden Spannung entsprechen.

Der Stromregeleinheit 10 werden ferner Sollwerte zugeführt. In dem in Figur 11 gezeigten Ausführungsbeispiel werden der Regelungseinheit 10 ein Wirkstromsollwert Ipref sowie ein Blindstromsollwert Iqref zugeführt. Ferner wird ein Gleichspannungssollwert Udref an den Eingang der Stromregeleinheit 10 gelegt. Statt eines Gleichspannungssollwertes Udref ist auch die Verwendung eines Gleichstomsollwertes Idref im Rahmen der Erfindung möglich.

Die Sollwerte Ipref, Iqref und Udref sowie die besagten Messwerte treten unter Einsatz verschiedener Regler in Wechselwirkung miteinander, wobei für jede Ansteuereinheit 9p1, 9p2, 9p3, 9n1, 9n2 und 9n3 ein Zweigspannungssollwert Up1ref, Up2ref, Up3ref, Un1ref, Un2ref, Un3ref erzeugt wird. Jede Ansteuereinheit 9 erzeugt Steuersignale für die ihr zugeordneten Submodule 7, so dass die an der Reihenschaltung der Submodule anfallende Spannung Up1, Up2, Up3, Un1, Un2, Un3 dem jeweiligen Zweigspannungssollwert Up1ref, Up2ref, Up3ref, Un1ref, Un2ref, Un3ref möglichst entspricht.

Die Stromregeleinheit 10 bildet aus ihren Eingangswerten geeignete Zweigspannungssollwerte Up1ref, Up2ref, Up3ref, Un1ref, Un2ref, Un3ref.

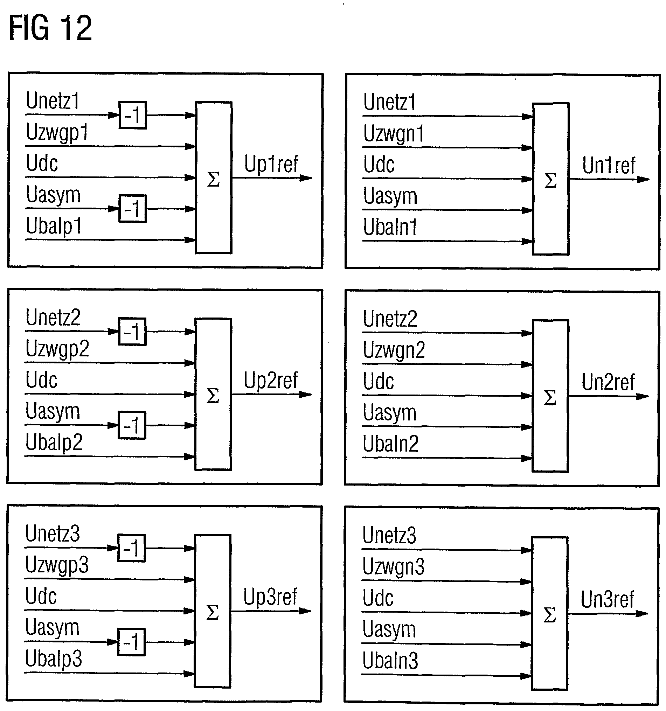

Figur 12 zeigt, dass beispielsweise der Zweigspannungssollwert Upref durch Linearkombination eines Netzphasenspannungssollwertes Unetz1, eines Zweigspannungszwischensollwertes Uzwgp1, eines Gleichspannungssollwertes Udc, eines Symmetrierungsspannungssollwertes Uasym und eines Balancierungsspannungssollwertes Ubalp1 berechnet wird. Dies erfolgt für jeden der Phasenmodulzweige 6p1, 6p2, 6p3, 6n1, 6n2, 6n3 unabhängig voneinander. Mit den Zweigspannungszwischensollwerten Uzwg können in Verbindung mit den eingestellten Zweiginduktivitäten die Kreisströme gezielt eingestellt werden. Auch die Balancierungsspannungssollwerte Ubal dienen zum Ausgleich von Unsymmetrien hinsichtlich der in den Phasenmodulzweigen gespeicherten 6p1, 6p2, 6p3, 6n1, 6n2, 6n3 Energien.

**Patentansprüche**

1. Vorrichtung (1) zum Umrichten eines elektrischen Stromes mit wenigstens einem Phasenmodul (2a,2b,2c), das einen Wechselspannungsanschluss ($3_1$,$3_2$,$3_3$) und wenigstens einen Gleichspannungsanschluss (p,n) aufweist, wobei zwischen jedem Gleichspannungsanschlüss (p,n) und jedem Wechselspannungsanschluss ($3_1$,$3_2$,$3_3$) ein Phasenmodulzweig (6p1,6p2,6p3,6n1,6n2,6n3) ausgebildet ist, und wobei jeder Phasenmodulzweig (6p1,6p2,6p3,6n1,6n2,6n3) über eine Reihenschaltung aus Submodulen (7) verfügt, die jeweils einen Energiespeicher (8) und wenigstens einen Leistungshalbleiter (T1,T2) aufweisen, mit Submodulsensoren zum Erfassen einer in dem Energiespeicher (8) gespeicherten Energie unter Gewinnung von Energiespeicherenergiewerten und mit Regelungsmitteln (9) zum Regeln der Vorrichtung (1) in Abhängigkeit der Energiespeicherenergiewerte und vorgegebener Sollwerte,
**dadurch gekennzeichnet, dass**
die Regelungsmittel (9) eine Summationseinheit zum Aufsummieren der Energiespeicherenergiewerte (Uc) unter Gewinnung von Zweigenergieistwerten (Uc$\sum$p1,...,Uc$\sum$n3) und Mittel zum Berechnen von Kreisstromsollwerten (Dvb,Dhgl,Dhge) in Abhängigkeit der Zweigenergieistwerte (Uc$\sum$p1,...,Uc$\sum$n3) aufweisen, wobei die Regelungsmittel (9) zum Ausgleich von Unsymmetrien bei den Zweigenergieistwerten (Uc$\sum$p1,...,Uc$\sum$n3) in Abhängigkeit der Kreisstromsollwerte (Dvb,Dhgl,Dhge) eingerichtet sind.

2. Vorrichtung (1) nach Anspruch 1,
**gekennzeichnet durch**
einen positiven und einen negativen Gleichspannungsanschluss (p,n), wobei Summationsmittel die Zweigenergieistwerte der Phasenmodulzweige, die mit dem positiven Gleichspannungsanschluss (p) verbunden sind, zu einer positiven Zweigsumme und die Zweigenergieistwerte der Phasenmodulzweige, die mit dem negativen Gleichspannungsanschluss (n) verbunden sind, zu einer negativen Zweigsumme aufsummieren und Differenzmittel (11), die Differenz aus der positiven Zweigsumme und der negativen Zweigsumme unter Gewinnung eines Vertikalkreisstromsollwertes (Dvb) zum Ausgleich einer vertikalen Unsymmetrie bilden.

3. Vorrichtung (1) nach Anspruch 2,
**gekennzeichnet durch**
Mittel zum Erzeugen einer netzfrequenten Mitsystemsollspannung (Uvb1, Uvb2, Uvb3) in Abhängigkeit des Vertikalkreissollstromes (Dvb) zum Ausgleich der vertikalen Unsymmetrie.

4. Vorrichtung (1) nach Anspruch 2,
**gekennzeichnet durch**
Mittel zum Erzeugen einer Asymmetriespannung (Uasym) in Abhängigkeit der Kreisstromsollwerte (Dvb) zum Ausgleich der vertikalen Unsymmetrie.

5. Vorrichtung (1) nach einem der vorhergehenden Ansprüche,
**gekennzeichnet durch**
Mittel zum Nachweis einer gleichsinnigen horizontalen Unsymmetrie, wobei die besagten Mittel Kreisstromsollwerte (Dhg11, Dhg12, Dhg13) in Abhängigkeit der nachgewiesenen gleichsinnigen horizontalen Unsymmetrie erzeugen.

6. Vorrichtung (1) nach Anspruch 5,
**gekennzeichnet durch**
Mittel zum Erzeugen von Kreisspannungssollwerten (uhg11, uhg12, uhg13) die jeweils einem Phasenmodul (2a,2b,2c) zugeordnet sind.

7. Vorrichtung (1) nach einem der vorhergehenden Ansprüche,
**gekennzeichnet durch**
Mittel zum Nachweis einer gegensinnigen horizontalen Unsymmetrie, wobei die besagten Mittel Kreisstromsollwerte (Dhge1, Dhge2, Dhge3) in Abhängigkeit der nachgewiesenen gegensinnigen horizontalen Unsymmetrie erzeugen.

8. Vorrichtung (1) nach Anspruch 7,
**gekennzeichnet durch**
Mittel zum Erzeugen eines netzfrequenten Gegensystemkreisspannung (uhge1, uhge2, uhge3) in Abhängigkeit der Kreisstromsollwerte (Dhge1, Dhge2, Dhge3).

9. Vorrichtung (1) nach einem der vorhergehenden Ansprüche,
**gekennzeichnet durch**
Mittel zur zeitgleichen Kompensation von vertikalen und horizontalen gegensinnigen Unsymmetrien.

10. Verfahren zum Umrichten eines Stromes mittels eines Umrichters (1), der wenigstens ein Phasenmodul (2a,2b,2c) mit wenigstens einem Gleichspannungsanschluss (p,n) und einem Wechselspannungsanschluss ($3_1$,$3_2$,$3_3$) aufweist, wobei zwischen jedem Gleichspannungsanschluss (p,n) und dem Wechselspannungsanschluss ($3_1$,$3_2$,$3_3$) ein Phasenmodulzweig (6p1,6p2,6p3,6n1,6n2,6n3) ausgebildet ist, der über eine Reihenschaltung aus Submodulen (7) verfügt, die jeweils einen Energiespeicher (8) und wenigstens einen Leistungshalbleiter (T1,T2) aufweisen, wobei die in jedem Energiespeicher (8) gespeicherte Energie unter Gewinnung eines Energiespeicherenergiewertes (Uc) erfasst, alle Energiespeicherenergiewerte (Uc) eines Phasenmodulzweiges unter Gewinnung von Zweigenergieistwerten (Uc∑p1,...,Uc∑n3) aufsummiert werden und in Abhängigkeit der Zweigenergieistwerte (Uc∑p1,...,Uc∑n3) Kreisstromsollwerte bestimmt werden, wobei in Abhängigkeit der Kreisstromsollwerte Kreisströme in den Phasenmodulen (2a,2b,2c) zum Ausgleich von Unsymmetrien erzeugt werden.

11. Verfahren nach Anspruch 10,
**dadurch gekennzeichnet, dass**
die Zweigenergieistwerte (Uc∑p1,Uc∑p2, Uc∑p3) aller Phasenmodule, die mit einem positiven Gleichspannungsanschluss (p) verbunden sind unter Gewinnung einer positiven Gesamtsumme und die Zweigenergieistwerte (Uc∑n1,Uc∑n2,Uc∑n3) aller Phasenmodulzweige, die mit einem negativen Gleichspannungsanschluss (n) verbunden sind, unter Gewinnung einer negativen Gesamtsumme aufsummiert werden, wobei die Differenz zwischen der positiven und der negativen Gesamtsumme unter Gewinnung eines vertikalen Kreisstromsollwertes (Dvb) gebildet wird.

12. Verfahren nach Anspruch 11,
**dadurch gekennzeichnet, dass**
ausgehend von dem vertikalen Kreisstromsollwert (Dvb) eine netzfrequente Mitsystemsollspannung (Uvb1, Uvb2, Uvb3) erzeugt wird.

13. Verfahren nach Anspruch 11
**dadurch gekennzeichnet, dass**
ausgehend von dem vertikalen Kreisstromsollwert (Dvb) mittels eines Proportionalreglers (10) eine Asymmetriesollspannung (Uasym) erzeugt wird.

14. Verfahren nach einem der Ansprüche 10 bis 13,
**dadurch gekennzeichnet, dass**
die Zweigenergieistwerte (Uc∑p1,Uc∑n1) aller Phasenmodulzweige eines Phasenmoduls (2a,2c,2c) unter Gewinnung von Phasenmodulenergiesummenwerten, die jeweils einer Phase zugeordnet sind, aufsummiert werden, der Mittelwert der Phasenmodulenergiesummenwerte über alle Phasen berechnet wird und für jede Phase die Differenz aus dem besagten Mittelwert und dem jeweiligen Phasenmodulenergiesummenwert unter Gewinnung von gleichsinnigen horizontalen Unsymmetriestromsollwerten (Dhg11, Dhg12, Dhg13) berechnet wird.

15. Verfahren nach Anspruch 14,
**dadurch gekennzeichnet, dass**
das aus den gleichsinnigen horizontalen Unsymmetriestromsollwerten (Dhg11, Dhg12, Dhg13) mittels Regler Kreissparinungssollwerte (Uhg11, Uhg12, Dhg13) gebildet werden, die als Sollspannung in die Regelung eingehen.

16. Vorrichtung (1) nach einem der vorhergehenden Ansprüche,

**dadurch gekennzeichnet, dass**
die Zweigenergieistwerte (Uc∑p1,Uc∑n1) aller Phasenmodulzweige eines Phasenmoduls (2a,2c,2c) unter Gewinnung von Phasenmodulenergiedifferenzwerten, die jeweils einer Phase zugeordnet sind, voneinander abgezogen werden, der Mittelwert der Phasenmodulenergiedifferenzwerte über alle Phasen berechnet wird und für jede Phase die Differenz aus dem besagten Mittelwert und dem jeweiligen Phasenmodulenergiedifferenzwert unter Gewinnung von gegensinnigen horizontalen Unsymmetriestromsollwerten (Dhge1, Dhge2, Dhge3) berechnet wird.

17. Vorrichtung (1) nach Anspruch 16,
**dadurch gekennzeichnet, dass**
das aus den gegensinnigen horizontalen Unsymmetriestromsollwerten (Dhge1, Dhge2, Dhge3) ein netzfrequentes Gegenspannungssystem (uhge1, uhge2, uhge3) erzeugt wird.

18. Verfahren nach einem der vorhergehenden Ansprüche,
**dadurch gekennzeichnet, dass**
der Zweigenergieistwert Uc∑p1 eines Phasenmodulzweiges (6n1), der mit einem negativen Gleichspannungsanschluss (n) verbunden ist, von dem Zweigenergieistwert Uc∑p1 des Phasenmodulzweiges (6p1) des gleichen Phasenmoduls (2a), der mit dem positiven Gleichspannungsanschluss (p) verbunden ist, unter Gewinnung einer Phasenzweigmoduldifferenz abgezogen wird, wobei die Phasenzweigmoduldifferenz als Amplitude einer periodischen Funktion dient, die mit der Netzfrequenz schwingt und einem Phasenmodul zugeordnet ist, wobei die periodischen Funktionen der anderen Phasenmodule jeweils phasenverschoben sind, so dass eine Mitsystemsollspannung gebildet wird.

**Claims**

1. Apparatus (1) for conversion of an electric current with at least one phase module (2a, 2b, 2c) which has an AC voltage connection ($3_1$, $3_2$, $3_3$) and at least one DC voltage connection (p, n), with a phase module branch (6p1, 6p2, 6p3, 6n1, 6n2, 6n3) being formed between each DC voltage connection (p, n) and each AC voltage connection ($3_1$, $3_2$, $3_3$) and with each phase module branch (6p1, 6p2, 6p3, 6n1, 6n2, 6n3) having a series circuit composed of submodules (7) which each have an energy store (8) and at least one power semiconductor (T1, T2), having submodule sensors for detection of energy stored in the energy store (8), with energy store energy values being obtained, and having regulation means (9) for regulation of the apparatus (1) as a function of the energy store energy values and predetermined nominal values,

**characterized in that**

the regulation means (9) have an addition unit for addition of the energy store energy values (Uc) with branch energy actual values (Uc$\sum$p1,...,Uc$\sum$n3) being obtained, and have means for calculation of circulating-current nominal values (Dvb, Dhgl, Dhge) as a function of the branch energy actual values (Uc$\sum$p1,...,Uc$\sum$n3), with the regulation means (9) being designed to compensate for unbalances in the branch energy actual values (Uc$\sum$p1,...,Uc$\sum$n3) as a function of the circulating-current nominal values (Dvb, Dhgl, Dhge).

2. Apparatus (1) according to Claim 1,
   **characterized by**
   a positive and a negative DC voltage connection (p, n), with addition means adding the branch energy actual values of the phase module branches, which are connected to the positive DC voltage connection (p), to form a positive branch sum and adding the branch energy actual values of the phase module branches, which are connected to the negative DC voltage connection (n), to form a negative branch sum, and by subtraction means (11) which form the difference between the positive branch sum and the negative branch sum in order to obtain a vertical circulating-current nominal value (Dvb) in order to compensate for any vertical unbalance.

3. Apparatus (1) according to Claim 2,
   **characterized by**
   means for production of a network-frequency positive-phase-sequence system nominal voltage (Uvb1, Uvb2, Uvb3) as a function of the vertical circulating nominal current (Dvb), in order to compensate for the vertical unbalance.

4. Apparatus (1) according to Claim 2,
   **characterized by**
   means for production of an unbalance voltage (Uasym) as a function of the circulating-current nominal values (Dvb) in order to compensate for the vertical unbalance.

5. Apparatus (1) according to one of the preceding claims,
   **characterized by**
   means for verification of a horizontal unbalance in the same sense, with said means producing circulating-current nominal values (Dhgl1, Dhgl2, Dhgl3) as a function of the verified horizontal unbalance in the same sense.

6. Apparatus (1) according to Claim 5,
   **characterized by**
   means for production of circulating-voltage nominal values (uhgl1, ughl2, ughl3), which are respectively associated with a phase module (2a, 2b, 2c).

7. Apparatus (1) according to one of the preceding claims,
   **characterized by**
   means for verification of a horizontal unbalance in the opposite sense, with said means producing circulating-current nominal values (Dhge1, Dhge2, Dhge3) as a function of the verified horizontal unbalance in the opposite sense.

8. Apparatus (1) according to Claim 7,
   **characterized by**
   means for production of a network-frequency negative-phase-sequence system circulating voltage (uhge1, uhge2, uhge3) as a function of the circulating-current nominal values (Dhge1, Dhge2, Dhge3).

9. Apparatus (1) according to one of the preceding claims,
   **characterized by**
   means for simultaneous compensation for vertical and horizontal unbalances in the opposite sense.

10. Method for conversion of a current by means of a converter (1) which has at least one phase module (2a, 2b, 2c) with at least one DC voltage connection (p, n) and an AC voltage connection ($3_1$, $3_2$, $3_3$), with a phase module branch (6p1, 6p2, 6p3, 6n1, 6n2, 6n3) being formed between each DC voltage connection (p, n) and the AC voltage connection ($3_1$, $3_2$, $3_3$) and having a series circuit composed of submodules (7) which each have an energy store (8) and at least one power semiconductor (T1, T2), with the energy which is stored in each energy store (8) being detected, with an energy store energy value (Uc) being obtained, with all the energy store energy values (Uc) of a phase module branch being added in order to obtain branch energy actual values (Uc$\sum$p1,...,Uc$\sum$n3), and with circulating-current nominal values being determined as a function of the branch energy actual values (Uc$\sum$p1,...,Uc$\sum$n3), with circulating currents in the phase modules (2a, 2b, 2c) being produced as a function of the circulating-current nominal values in order to compensate for unbalances.

11. Method according to Claim 10,
    **characterized in that**
    the branch energy actual values (Uc$\sum$p1,Uc$\sum$p2,Uc$\sum$p3) of all the phase modules which are connected to a positive DC voltage connection (p) are added in order to obtain a positive total sum, and the branch energy actual values (Uc$\sum$n1,Uc$\sum$n2,Uc$\sum$n3) of all the phase module branches which are connected to a negative DC voltage connection (n) are added to obtain a negative total sum, with the difference between the positive and the negative total sum being formed in order to obtain a vertical circulating-current nominal value (Dvb).

12. Method according to Claim 11,
**characterized in that**
a network-frequency positive-phase-sequence system nominal voltage (Uvb1, Uvb2, Uvb3) is produced on the basis of the vertical circulating-current nominal value (Dvb).

13. Method according to Claim 11,
**characterized in that**
an unbalance nominal voltage (Uasym) is produced on the basis of the vertical circulating-current nominal value (Dvb), by means of a proportional regulator (10).

14. Method according to one of Claims 10 to 13,
**characterized in that**
the branch energy actual values (Uc∑p1,Uc∑n1) of all the phase module branches of a phase module (2a, 2b, 2c) are added in order to obtain phase module energy sum values which are associated with a respective phase, the mean value of the phase module energy sum values over all the phases is calculated, and the difference from said mean value and the respective phase module energy sum value is calculated for each phase, obtaining horizontal unbalance-current nominal values (Dhgl1, Dhgl2, Dhgl3) in the same sense.

15. Method according to Claim 14,
**characterized in that**
circulating-voltage nominal values (Uhgl1, Uhgl2, Uhgl3) are formed by means of regulators from the horizontal unbalance-current nominal values (Dhgl1, Dhgl2, Dhgl3) in the same sense, and are included as a nominal voltage in the regulation process.

16. Apparatus (1) according to one of the preceding Claims,
**characterized in that**
the branch energy actual values (Uc∑p1,Uc∑n1) of all the phase module branches of a phase module (2a, 2c, 2c) are subtracted from one another in order to obtain phase module energy difference values which are associated with a respective phase, the mean value of the phase module energy difference values is calculated over all the phases, and the difference from said mean value and the respective phase module energy difference value is calculated for each phase, in order to obtain horizontal unbalance-current nominal values (Dhge1, Dhge2, Dhge3) in the opposite sense.

17. Apparatus (1) according to Claim 16,
**characterized in that**
a network-frequency negative-phase-sequence voltage system (uhge1, uhge2, uhge3) is produced from the horizontal unbalance-current nominal values (Dhge1, Dhge2, Dhge3) in the opposite sense.

18. Method according to one of the preceding claims,
**characterized in that**
the branch energy actual value Uc∑p1 of a phase module branch (6n1) which is connected to a negative DC voltage connection (n) is subtracted from the branch energy actual value Uc∑p1 of the phase module branch (6p1) of the same phase module (2a) which is connected to the positive DC voltage connection (p), with a phase branch module difference being obtained, with the phase branch module difference being used as the amplitude of a periodic function which oscillates at the network frequency and is associated with a phase module, and with the periodic functions of the other phase modules each being phase-shifted so as to form a positive-phase-sequence system nominal voltage.

**Revendications**

1. Dispositif (1) de conversion d'un courant électrique, comprenant au moins un module (2a, 2b, 2c) de phase, qui a une borne ($3_1$, $3_2$, $3_3$) de tension alternative et au moins une borne (p, n) de tension continue, une branche (6p1, 6p2, 6p3, 6n1, 6n2, 6n3) de module de phase étant constituée entre chaque borne (p, n) de tension continue et chaque borne ($3_1$, $3_2$, $3_3$) de tension alternative et dans lequel chaque branche (6p1, 6p2, 6p3, 6n1, 6n2, 6n3) de module de phase dispose d'un circuit série de sous-modules (7), qui ont chacun un accumulateur (8) d'énergie et au moins un semi-conducteur (T1, T2) de puissance, comprenant des capteurs de sous-module, pour détecter une énergie emmagasinée dans l'accumulateur (8) d'énergie, en obtenant des valeurs d'énergie d'accumulateur d'énergie et comprenant des moyens (9) de régulation, pour réguler le dispositif (1) en fonction des valeurs d'énergie des accumulateurs d'énergie et de valeur de consigne données à l'avance,
**caractérisé en ce que**
les moyens (9) de régulation ont une unité de sommation, pour sommer les valeurs (Uc) d'énergie des accumulateurs d'énergie, en obtenant des valeurs (Uc∑p1,...,Uc∑n3) réelles d'énergie de branche et des moyens de calcul de valeurs (Dvb, Dhgl, Dhge) de consigne de courant de circuit, en fonction des valeurs (Uc∑p1,...,Uc∑n3) réelles d'énergie de branche, les moyens (9) de régulation étant conçus pour compenser des dissymétries dans les valeurs (Uc∑p1,...,Uc∑n3) réelles d'énergie de branche, en fonction des valeurs (Dvb, Dhgl, Dhge) de consigne de courant de circuit.

**2.** Dispositif (1) suivant la revendication 1, **caractérisé par** une borne (p) de tension continue positive et une borne (n) de tension continue négative, des moyens de sommation sommant les valeurs réelles d'énergie de branche des branches de module de phase, qui sont reliés à la borne (p) de tension continue positive, en une somme de branches positive et les valeurs réelles d'énergie de branche des branches de module de phase, qui sont reliés à la borne (n) de tension continue négative, en une somme de branches négative et des moyens (11) de différence formant la différence entre la somme de branches positive et la somme de branches négative, en obtenant une valeur (Dvb) de consigne de courant de circuit vertical afin de compenser une dissymétrie verticale.

**3.** Dispositif (1) suivant la revendication 2, **caractérisé par** des moyens de production d'une tension (Uvb1, Uvb2, Uvb3) de consigne de système direct à la fréquence du réseau, en fonction du courant (Dvb) de consigne de circuit vertical, afin de compenser la dissymétrie verticale.

**4.** Dispositif (1) suivant la revendication 2, **caractérisé par** des moyens de production d'une tension (Uasym) de dissymétrie, en fonction de la valeur (Dvb) de consigne de courant de circuit, afin de compenser la dissymétrie verticale.

**5.** Dispositif (1) suivant l'une des revendications précédentes, **caractérisé par** des moyens d'indication d'une dissymétrie horizontale de même sens, lesdits moyens produisant des valeurs (Dhg11, Dhg12, Dhg13) de consigne de courant de circuit, en fonction de la dissymétrie horizontale de même sens indiquée.

**6.** Dispositif (1) suivant la revendication 5, **caractérisé par** des moyens de production de valeur (uhg11, uhg12, uhg13) de consigne de tension de circuit, associés respectivement à un module (2a, 2b, 2c) de phase.

**7.** Dispositif (1) suivant l'une des revendications précédentes, **caractérisé par** des moyens d'indication d'une dissymétrie horizontale de sens contraire, lesdits moyens produisant des valeurs (Dhge1, Dhge2 ; Dhge3) de consigne de courant de circuit, en fonction de la dissymétrie horizontale de sens contraire indiquée.

**8.** Dispositif (1) suivant la revendication 7, **caractérisé par** des moyens de production d'une tension (uhge1, uhge2, uhge3) de circuit de système inverse à la fréquence du réseau, en fonction des valeurs (Dhge1, Dhge2, Dhge3) de consigne de courant de circuit.

**9.** Dispositif (1) suivant l'une des revendications précédentes, **caractérisé par** des moyens de compensation, en même temps, de dissymétries verticale et horizontale de sens contraire.

**10.** Procédé de conversion d'un courant au moyen d'un convertisseur (1), qui a au moins un module (2a, 2b, 2c) de phase, qui a une borne ($3_1$, $3_2$, $3_3$) de tension alternative et au moins une borne (p, n) de tension continue, une branche (6p1, 6p2, 6p3, 6n1, 6n2, 6n3) de module de phase étant constituée entre chaque borne (p, n) de tension continue et chaque borne ($3_1$, $3_2$, $3_3$) de tension alternative et dans lequel chaque branche (6p1, 6p2, 6p3, 6n1, 6n2, 6n3) de module de phase dispose d'un circuit série de sous-module (7), qui ont chacun un accumulateur (8) d'énergie et au moins un semi-conducteur (T1, T2) de puissance, dans lequel on détecte l'énergie emmagasinée dans chaque accumulateur (8) d'énergie, en obtenant une valeur (Uc) d'énergie d'accumulateur d'énergie, on somme toutes les valeurs (Uc) d'énergie d'accumulateur d'énergie d'une branche de module de phase, en obtenant des valeurs (Uc∑p1,...,Uc∑n3) réelles d'énergie de branche et, en fonction des valeurs (Uc∑p1,...,Uc∑n3) réelles d'énergie de branche, on détermine des valeurs de consigne de courant de circuit, dans lequel on produit des courants de circuit dans les modules (2a, 2b, 2c) de phase, en fonction des valeurs de consigne de courant de circuit, afin de compenser des dissymétries.

**11.** Procédé suivant la revendication 10, **caractérisé en ce que** on somme les valeurs (Uc∑p1, Uc∑p2, Uc∑p3) réelles d'énergie de branche de tous les modules de phase qui sont reliés à une borne (p) de tension continue positive, en obtenant une somme globale positive et les valeurs (Uc∑n1, Uc∑n2, Uc∑n3) réelles d'énergie de branche de toutes les branches de module de phase qui sont reliées à une borne (n) de tension continue négative, en obtenant une somme globale négative, dans lequel on forme la différence entre la somme globale positive et la somme globale négative, en obtenant une valeur (Dvb) de consigne de courant de circuit vertical.

**12.** Procédé suivant la revendication 11,

**caractérisé en ce qu'**

à partir de la valeur (Dvb) de consigne de courant de circuit vertical, on produit une tension (Uvb1, Uvb2, Uvb3) de consigne de système direct à la fréquence du réseau.

13. Procédé suivant la revendication 11,
    **caractérisé en ce qu'**

    à partir de la valeur (Dvb) de consigne de courant de circuit vertical, on produit, au moyen d'un régleur (10) proportionnel, une tension (Uasym) de consigne de dissymétrie.

14. Procédé suivant l'une des revendications 10 à 13,
    **caractérisé en ce que** l'on somme les valeurs (Uc∑p1, Uc∑n1) réelles d'énergie de branche de toutes les branches de module de phase, d'un module (2a, 2b, 2c) de phase, en obtenant des valeurs de somme d'énergie de module de phase, associées respectivement à une phase, on calcule la valeur moyenne des valeurs de somme d'énergie de module de phase sur toutes les phases et, pour chaque phase, on calcule la différence entre la valeur moyenne et chaque valeur de somme d'énergie de module de phase, en obtenant des valeurs (Dhg11, Dhg12, Dhg13) de consigne de courant de dissymétrie horizontale de même sens.

15. Procédé suivant la revendication 14,
    **caractérisé en ce que**

    l'on forme, à partir des valeurs (Dhg11, Dhg12, Dhg13) de consigne de courant de dissymétrie horizontale de même sens, au moyen d'un régleur, des valeurs (Uhg11, Uhg12, Uhg13) de consigne de tension de circuit, qui entrent, en tant que tension de consigne, dans la régulation

16. Dispositif (1) suivant l'une des revendications précédentes,
    **caractérisé en ce que**

    l'on soustrait les valeurs (Uc∑p1, Uc∑n1) réelles d'énergie de branche de toutes les branches de module de phase d'un module (2a, 2b, 2c) de phase, en obtenant des valeurs de différence d'énergie de module de phase, associées chacune à une phase, on calcule la valeur moyenne des valeurs de différence d'énergie de module de phase sur toutes les phases et on calcule, pour chaque phase, la différence entre la valeur moyenne et chaque valeur de différence d'énergie de module de phase, en obtenant des valeurs (Dhge1, Dhge2, Dhge3) de consigne de courant de dissymétrie horizontale de sens contraire.

17. Dispositif suivant la revendication 16,
    **caractérisé en ce qu'**

    à partir des valeurs (Dhge1, Dhge2, Dhge3) de consigne de courant de dissymétrie horizontale de sens contraire, on produit une tension (uhge1, uhge2, uhge3) de système inverse à la fréquence du réseau.

18. Procédé suivant l'une des revendications précédentes,
    **caractérisé en ce que**

    l'on soustrait, en obtenant une différence de module de branche de phase, la valeur Uc∑p1 réelle d'énergie de branche, d'une branche (6n1) de module de phase reliée à une borne (n) de tension continue négative, de la valeur Uc∑p1 réelle d'énergie de branche du module (6P1) de module de phase du même module (2a) de phase relié à la borne (p) de tension continue positive, la différence de module de branche de phase servant d'amplitude d'une fonction périodique, qui oscille à la fréquence du réseau et qui est associée à un module de phase, les fonctions périodiques des autres modules de phase étant déphasées, de manière à former une tension de consigne de système direct.

FIG 1

EP 2 100 366 B1

14

# FIG 2

## FIG 3

## FIG 4

## FIG 5

## FIG 6

## FIG 7

# FIG 8

# FIG 9

## FIG 10

# FIG 11

# FIG 12

Unetz1 $\xrightarrow{}$ $\boxed{-1}$ $\xrightarrow{}$
Uzwgp1 $\xrightarrow{}$
Udc $\xrightarrow{}$ $\Sigma$ $\xrightarrow{}$ Up1ref
Uasym $\xrightarrow{}$ $\boxed{-1}$ $\xrightarrow{}$
Ubalp1 $\xrightarrow{}$

Unetz1 $\xrightarrow{}$
Uzwgn1 $\xrightarrow{}$
Udc $\xrightarrow{}$ $\Sigma$ $\xrightarrow{}$ Un1ref
Uasym $\xrightarrow{}$
Ubaln1 $\xrightarrow{}$

Unetz2 $\xrightarrow{}$ $\boxed{-1}$ $\xrightarrow{}$
Uzwgp2 $\xrightarrow{}$
Udc $\xrightarrow{}$ $\Sigma$ $\xrightarrow{}$ Up2ref
Uasym $\xrightarrow{}$ $\boxed{-1}$ $\xrightarrow{}$
Ubalp2 $\xrightarrow{}$

Unetz2 $\xrightarrow{}$
Uzwgn2 $\xrightarrow{}$
Udc $\xrightarrow{}$ $\Sigma$ $\xrightarrow{}$ Un2ref
Uasym $\xrightarrow{}$
Ubaln2 $\xrightarrow{}$

Unetz3 $\xrightarrow{}$ $\boxed{-1}$ $\xrightarrow{}$
Uzwgp3 $\xrightarrow{}$
Udc $\xrightarrow{}$ $\Sigma$ $\xrightarrow{}$ Up3ref
Uasym $\xrightarrow{}$ $\boxed{-1}$ $\xrightarrow{}$
Ubalp3 $\xrightarrow{}$

Unetz3 $\xrightarrow{}$
Uzwgn3 $\xrightarrow{}$
Udc $\xrightarrow{}$ $\Sigma$ $\xrightarrow{}$ Un3ref
Uasym $\xrightarrow{}$
Ubaln3 $\xrightarrow{}$

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005045090

**In der Beschreibung aufgeführte Nicht-Patentliteratur**

- **BEITRAG VON A. LESNICAR ; R. MARQUARDT.** An Innovative Modular Multilevel Converter Topology Suitable for a Wide Power Range. *Powertech,* 2003
- **VON R. MARQUARDT ; A. LESNICAR ; J. HILDINGER.** Modulares Stromrichterkonzept für Netzkupplungsanwendung bei hohen Spannungen. *ETG-Fachtagung in Bad Nauenheim,* 2002
- **VON A. LESNICAR ; R. MARQUARDT.** A new modular voltage source inverter topology. *EPE,* 2003, vol. 03
- **VON R. MARQUARDT ; A. LESNICAR.** New Concept for High Voltage - Modular Multilevel Converter. *PESC 2004 Conference in Aachen*